# EUROPÄISCHE PATENTSCHRIFT

(11) **EP 1 200 240 B1**
(45) Veröffentlichungstag und Bekanntmachung des Hinweises auf die Patenterteilung: **19.10.2005**
(21) Anmeldenummer: 00958358.4
(22) Anmeldetag: 02.08.2000
(51) Int. Cl.: B29C 45/27

(54) **HERSTELLUNGSVERFAHREN FÜR FORMTEILE**
METHOD FOR PRODUCING MOULD PARTS
PROCEDE DE PRODUCTION DE PIECES MOULEES

(30) Priorität: 05.08.1999 DE 19936235
(43) Veröffentlichungstag der Anmeldung: 02.05.2002
(73) Patentinhaber: Reckitt Benckiser N.V., 2132 NZ Hoofddorp (NL)
(72) Erfinder: WIEDEMANN, Ralf, D-64347 Griesheim (DE); WOLF, Natascha, D-67061 Ludwigshafen (DE); HALBHERR, Axel, D-67227 Frankenthal (DE); VAN DIEPEN, Jacques, S., P., Farley Hill, Reading, Berkshire RG7 1UH (GB); HERTLING, Ludwig, D-68643 Biblis (DE)
(74) Vertreter: Brown, Andrew Stephen
(86) Internationale Anmeldenummer: PCT/EP2000/007473
(87) Internationale Veröffentlichungsnummer: WO 2001/010626

(56) Entgegenhaltungen:
- EP-A- 0 730 938
- DE-A- 3 814 257
- DE-A- 4 204 285
- DE-A- 19 502 468
- PATENT ABSTRACTS OF JAPAN vol. 1996, no. 5, 31. Mai 1996 (1996-05-31) & JP 08 001722 A (TOSHIBA SILICONE CO LTD), 9. Januar 1996 (1996-01-09)

## Beschreibung

Die Erfindung betrifft ein Verfahren zur Herstellung einer Mehrzahl von Formteilen, insbesondere durch Spritzguß.

Der Spritzguß ist ein sehr wirtschaftliches modernes Verfahren zur Herstellung von Formteilen und eignet sich insbesondere für die automatisierte Massenfertigung. Beim Spritzgußverfahren wird üblicherweise eine thermoplastische Formmasse bis zur Verflüssigung erwärmt und unter hohem Druck in geschlossene, mehrteilige, üblicherweise stählerne und wassergekühlte Hohlformen eingespritzt, wo sie abkühlt und erstarrt.

Als Spritzgußmassen können Polystyrol, Polyamide. Polyurethane, Cellulosether und -ester. Polyethylen. Polymethacrylsäureester und andere Thermoplaste, in der Form aushärtende Duroplaste bzw. vulkanisierende Elastomere aus Kautschuk oder Silikonkautschuk oder auch Schaumkunststoffe eingesetzt werden. Darüberhinaus ist es auch möglich, wachs- oder gelartige Materialien zu verwenden, die dann üblicherweise nicht so hoch erwärmt werden müssen, um die für den Spritzgußvorgang erforderliche Viskosität zu erreichen.

Bei einer üblichen Spritzgußform (siehe z.B. EP 0 730 938 A1) gehen von einer oder mehreren Einspritzstellen Kanäle ab. die zu den Hohlräumen mit einer den Formteilen entsprechenden Ausgestaltung führen. Das Produkt eines solchen Spritzgußvorganges besteht dann üblicherweise aus den Formteilen, die mit dem Anspritzstück durch Stege verbunden sind. Die Formteile müssen durch eine entsprechende Nachbearbeitung von diesen Stegen getrennt werden, was zum einen mindestens einen zusätzlichen Arbeitsschritt erfordert und zum anderen Ausschußmaterial in Form der Verbindungsstege zurückläßt. Darüberhinaus ist die Anzahl der in einer Form produzierbaren Formteile begrenzt.

Der Erfindung liegt daher die Aufgabe zugrunde, Herstellungsverfahren für Formteile, insbesondere ein Spritzgußverfahren, zu entwickeln, mit dem zeitsparend eine große Anzahl von Formteilen hergestellt werden kann, ohne daß eine Nachbearbeitung notwendig wird und/oder in signifikantem Maße Ausschußmaterial anfällt.

Erfindungsgemäß wird diese Aufgabe durch ein Verfahren nach Anspruch 1 gelöst.

In einer Ausführungsform der Erfindung sind die Hohlräume in einer Reihe angeordnet.

In anderen Ausführungsformen der Erfindung sind die Hohlräume so angeordnet, daß - bis auf die Hohlräume in Randstellung - jeder Hohlraum eng benachbart zu vier bis sechs weiteren Hohlräumen angeordnet ist.

Besonders bevorzugt ist eine einzige Stelle für das Einbringen der Formmasse vorgesehen, die vorzugsweise in der Anordnung der Hohlräume mittig angeordnet ist.

Bei einer bevorzugten Ausführungsform der Erfindung sind die Hohlräume im wesentlichen kugelförmig ausgebildet.

In einer weiteren Ausführungsform der Erfindung wird die Formmasse so in eine Form eingebracht, daß eine im wesentlichen vollständige Ausfüllung aller Hohlräume gewährleistet ist.

Bevorzugt wird als Formmasse ein Material verwendet, das nach dem Erstarren in der Form eine Härte von höchstens 200 N. bevorzugt zwischen 20 und 120 N aufweist, bestimmt als Kraft, bei der eine Kugel von 11 mm aus dem Material zerberstet.

Bevorzugt ist das erfindungsgemäße Verfahren ein Spritzgußverfahren.

Durch die vorgesehene Anordnung der Hohlräume in enger Nachbarschaft zueinander und deren Verbindung untereinander durch relativ kurze und enge Verbindungskanäle ist es möglich eine große Anzahl von Formteilen in kurzer Zeit herzustellen. Eine Nachbearbeitung ist üblicherweise nicht erforderlich, da die Verbindungsstege so kurz und dünn sind, daß eine Vereinzelung der Formteile bereits beim (üblicherweise völlig problemlosen) Entleeren der Form eintritt. Dadurch verbleiben höchstens minimale Ansatzstellen an den Formteilen, die üblicherweise tolerierbar sind, und es fällt nahezu kein Ausschußmaterial an. Darüberhinaus haben die bisherigen Tests gezeigt, daß selbst in den Verbindungskanälen zwischen den Hohlräumen zurückbleibendes Material, insbesondere beim Spritzguß, kein Problem darstellt, da dieses normalerweise beim nächsten Formvorgang (bei Spritzguß selbst bei relativ geringen Drücken) aus diesen herausgedrückt wird.

Das erfindungsgemäße Verfahren kann besonders wirkungsvoll dann in die Praxis umgesetzt werden, wenn Formmassen verwendet werden, die nach dem Erstarren in der Form eine Härte von höchstens 200 N. bevorzugt zwischen 20 und 120 N. aufweisen, bestimmt als Kraft, bei der eine Kugel mit einem Durchmesser von 11 mm aus dem jeweiligen Material zerberstet. Derartige nach dem Erstarren relativ weiche Materialien erleichtern das Entleeren der Form und vermeiden oft vollständig eine Nachbearbeitung der Formteile. Das Verfahren ist zwar grundsätzlich für alle anderen Arten von Formmassen geeignet, um in einer Form eine große Anzahl von Formteilen mit einer geringen Menge von Ausschußmaterialien herzustellen. Bei härteren Materialien (z.B. aus Kunststoff) wird im Regelfall allerdings noch eine separate Vereinzelung der Formteile, d.h. eine Trennung von den kurzen Stegen zwischeneinander, und in vielen Fällen auch eine gewisse Nachbearbeitung erforderlich sein. Die Vorteile des erfindungsgemäßen Verfahrens zeigen sich daher besonders ausgeprägt bei relativ weichen Materialien mit der oben angegebenen maximalen Härte.

Bevorzugt wird das erfindungsgemäße Verfahren beim Spritzguß angewendet. Hierauf stellt auch das nachfolgende Beispiel primär ab. Die Erfindung kann aber auch bei anderen Verfahren zur Herstellung von Formteilen eingesetzt werden. So können die beschriebenen Formen und das beschriebene Verfahren bspw. bei jeder Art von Gießverfahren zum Einsatz kommen, mit der eine Form mit einer entsprechenden Formmasse gefüllt wird.

Die Erfindung wird nunmehr anhand der nachfolgenden Zeichnungen bzw. eines konkreten Ausführungsbeispieles näher erläutert werden. Dabei zeigt:
Fig. 1 eine Ausführungsform einer Halbform in schematischer Darstellung;
Fig. 2 eine weitere Ausführungsform einer Halbform in schematischer Darstellung; und
Fig. 3 eine dritte Ausführungsform einer Halbform in schematischer Darstellung.

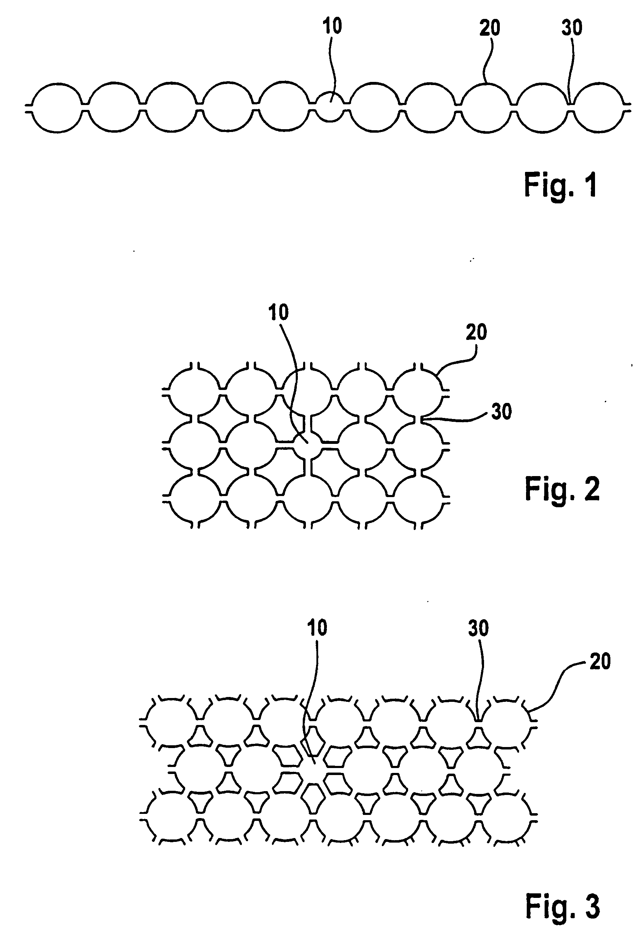

Fig. 1 zeigt eine mögliche Ausführungsform einer Form, bei der die Hohlräume 20 in einer Reihe angeordnet sind, wobei mittig in dieser Reihe die Einspritzstelle 10 für die Spritzgußmasse vorgesehen ist. Dabei müssen die Hohlräume 20 nicht - wie in Fig. 1 dargestellt - in einer geraden Linie hintereinander angeordnet sein, sondern können auch in einem Mäandermuster liegen, d.h. in nebeneinanderliegenden Reihen, bei denen die Hohlkörper der jeweiligen Reihen untereinander und die jeweiligen Reihen miteinander durch einen Verbindungskanal zwischen den jeweiligen Hohlräumen in Endstellung der Reihen wechselweise an entgegengesetzten Enden verbunden sind.

Die Verbindungen zwischen der Einspritzstelle 10 und den benachbarten Hohlräumen bzw. zwischen den einzelnen Hohlräumen erfolgt über kürzestmögliche Kanäle 30 mit möglichst geringem Durchmesser bzw. möglichst geringen Querschnittskantenlänge, Die genauen Abmessungen können in Abhängigkeit von der Spritzgußmasse variieren, liegen aber üblicherweise im Bereich von 0.1 bis 5 mm Länge, bevorzugt 0.2 bis 2 mm, noch bevorzugter 0.3 bis 1 mm, und 0.5 bis 3 mm Durchmesser bzw. Querschnittskantenlänge, bevorzugt 2 mm.

Fig. 2 zeigt eine andere Anordnung der Hohlräume, bei der die Einspritzstelle 10 wieder mittig angebracht ist, die Hohlräume aber so in horizontal angeordneten Reihen angeordnet sind, daß sich auch nebeneinanderliegende vertikale Reihen ergeben, so daß jeder Hohlraum - mit Ausnahme derjenigen am Rande - jeweils vier eng benachbarten Hohlräumen besitzt (Gitteranordnung).

Ähnlich aufgebaut, aber mit noch einer größeren Dichte von Hohlräumen auf derselben Fläche ist eine Anordnung mit gegeneinander versetzten Reihen, wie in Fig. 3, wodurch sich eine wabenartige Struktur ergibt. d.h. jeder Hohlraum - wieder mit Ausnahme derjenigen am Rande bzw. benachbart zur Einspritzstelle - jeweils sechs eng benachbarte Hohlräumen besitzt.

Die Darstellungen der Anordnungen von Hohlräumen in Fig. 2 und Fig. 3 zeigen die maximal mögliche Anzahl von Verbindungskanälen 30 zwischen diesen Hohlräumen. In Abhängigkeit von dem verwendeten Material sowie möglicherweise anderen Prozeßparametern, wie dem Einspritzdruck, müssen aber durchaus nicht sämtliche dieser Kanäle offen sein, d.h. in der tatsächlichen Form erstellt werden. Wesentlich ist, daß Verbindungskanäle so angeordnet werden, daß eine Füllung der Form von Hohlraum zu Hohlraum erfolgen kann, was ein grundlegendes Prinzip der vorliegenden Erfindung darstellt. Die Öffnung der Verbindungskanäle 30 zwischen den Hohlräumen 20 kann bspw. so gewählt werden, daß die Spritzgußmasse sich von der Einspritzstelle 10 im wesentlichen gleichmäßig radial verteilt. d.h. mögliche Rückströme oder Kreisströme vermieden werden. Durch einfache Versuche ist es für den Durchschnittsfachmann möglich, die optimale Anzahl von Verbindungskanälen zwischen den Hohlräumen für ein bestimmtes Material zu ermitteln. Die Dimensionierung der Verbindungskanäle zwischen den Hohlräumen in Fig. 2 und Fig. 3 liegt im selben Größenbereich wie bei der Ausführungsform gemäß Fig. 1.

### Beispiel

Es wurden Spritzgußformen gemäß allen drei näher erläuterten Ausführungsformen hergestellt. Die Hohlräume, die kugelförmig ausgebildet waren, hatten einen Durchmesser von ca. 11 mm. Die Verbindungskanäle zwischen diesen Hohlräumen hatten dabei eine Länge von 0.4 mm und Querschnittsabmessungen von 2 mm x 1 mm.

Die Reihenanordnung gemäß Fig. 1 wies dabei 10 Hohlräume auf, jeweils 5 in einer Linie hintereinander rechts bzw. links von der Einspritzstelle. In der gitterartigen Struktur gemäß Fig. 2 wurden 120 kugelförmige Hohlräume angeordnet. Bei einer Anordnung gemäß Fig. 3 können in ähnlich großen Formen noch weit mehr Hohlräume in einer Form untergebracht werden, wobei erste Versuche mit einer Form mit ca. 800 Hohlräumen bereits durchgeführt wurden. Es sind aber auch durchaus Dimensionierungen mit 2000 bis 2500 Hohlräumen oder sogar noch mehr ohne weiteres denkbar.

Als Spritzgußmasse wurden tensidhaltige Zusammensetzungen verwendet, um kugelförmige Teilchen für den Reinigungsmittelsektor herzustelien, wie sie beispielsweise in der (nicht vorveröffentlichten) Patentanmeldung DE 198 34 180.6 beschrieben sind. In der folgenden Tabelle 1, in der einige Untersuchungsergebnisse zusammengestellt sind, bedeutet Solid 20 Polyethylenglykol mit einer mittleren relativen Molekülmasse von 20.000 (PEG 20.000). Solid 35 ein Polyethylenglykol mit einer mittleren relativen Molekülmasse von 35.000 (PEG 35.000) und Liquid 30 das Tensid Synperonic®RA30, ein Polyethylenoxid/propylenoxid, gebunden an einen C₁₃-C₁₅-Alkohol (C₁₃-C₁₅O(EO)₆(PO)₃).

| | Viskosität [mPa·s]* | Temperatur der Spritzgußmasse beim Einspritzen [°C] | Härte der resultierenden Kugel [N] |
|---|---|---|---|
| Solid20 (50%) | bei 80°C = 2750 | 75-85 | 40-50 |
| Liquid30 (50%) | bei 90°C = 2450 | | |
| | bei 100°C = 2350 | | |
| Solid 20 (70%) | bei 80°C = 5000 | 80-85 | 70-80 |
| Liquid30 (30%) | bei 90°C = 4000 | | |
| | bei 100°C = 3300 | | |
| Solid35 (50%) | bei 80°C = 9500 | 95-105 | 45-55 |
| Liquid30 (50%) | bei 90°C = 5400 | | |
| | bei 100°C = 3950 | | |

| | | | |
|---|---|---|---|
| *LVTD-Viskometer, Spinner 25 | | | |

Um die Härte des Materials zu testen, wurden die Kugeln (Durchmesser 11 mm) auf einem Erichsen-486-Kraftmeßgerät überprüft. Es wird die Kraft bestimmt, bei der die Kugel zerberstet. Wie aus der obigen Tabelle zu sehen, liegen sämtliche Werte für die Materialhärte in dem bevorzugten Bereich von 20 bis 120 N.

In allen Fällen war eine problemlose Verarbeitung der Materialien mit den beschriebenen Formen mit einem relativ niedrigen Einspritzdruck unter 100 bar möglich. Die Kugeln härteten bei einer Kühlung der Form auf 10 bis 15°C in 50-60 Sekunden aus. Beim Öffnen und Leeren der Form erfolgte eine problemlose Vereinzelung der Kugeln. Eine Nachbearbeitung war nicht erforderlich. Selbst wenn noch Spritzgußaasätze an den Kugel vorhanden sind, brechen diese beim weiteren Transport der Kugeln ab, d.h. wenn die Kugeln über ihre Oberfläche rollen.

## Patentansprüche

1. Verfahren zur Herstellung einer Mehrzahl von Formteilen wobei an wenigstens einer Stelle 10 eine Formmasse in eine Mehrzahl von Hohlräumen (20) mit einer den Formteilen entsprechenden Ausgestaltung eingebracht wird, wobei die Kohlräume so angeordnet werden, daß - mit Ausnahme der Hohlräume in End - oder Randstellung - jeder Hohlraum mit mindestens zwei eng benachbarten Hohlräumen verbunden ist; **daduch gekennzeichnet daß** als Formmasse eine tensidhaltige Zusammensetzung verwendet wird.

2. Verfahren nach Anspruch 1, **dadurch gekennzeichnet, daß** die Hohlräume (20) in einer Reihe angeordnet sind.

3. Verfahren nach Anspruch 1 oder 2, **dadurch gekennzeichnet, daß** die Hohlräume (20) so angeordnet sind, daß - bis auf die Hohlräume in Randstellung - jeder Hohlraum eng benachbart zu vier weiteren Hohlräumen angeordnet ist.

4. Verfahren nach Anspruch 1 oder 2, **dadurch gekennzeichnet, daß** die Hohlräume (20) so angeordnet sind, daß bis auf die Hohlräume in Randstellung - jeder Hohlraum eng benachbart zu sechs weiteren Hohlräumen angeordnet ist.

5. Verfahren nach einem der vorangehenden Ansprüche, **gekennzeichnet durch** eine einzige Stelle für das Einbringen der Formmasse.

6. Verfahren nach Anspruch 5, **dadurch gekennzeichnet, daß** die Stelle (10) in der Anordnung der Hohlräume mittig angeordnet ist.

7. Verfahren nach einem der vorangehenden Ansprüche, **dadurch gekennzeichnet daß** die Hohlräume im wesentlichen kugelförmig ausgebildet sind.

8. Verfahren zur Herstellung einer Mehrzahl von Formteilen, **dadurch gekennzeichnet daß** eine Formmasse so in eine Form nach einem der Ansprüche 1 bis 7 eingebracht wird, daß eine im wesentlichen vollständige Ausfüllung aller Hohlräume gewährleistet ist.

9. Verfahren nach Anspruch 8, **dadurch gekennzeichnet, daß** als Formmasse ein Material verwendet wird, das nach dem Erstarren in der Form eine Härte von höchstens 200 N aufweist, bestimmt als Kraft, bei der eine Kugel mit einem Durchmesser van 11mm aus dem Material zerberstet.

10. Verfahren nach Anspruch 9, **dadurch gekennzeichnet, daß** als Formmasse ein Material verwendet wird, das nach dem Erstarren in der Form eine Härte zwischen 20 und 120 N aufweist.

11. Verfahren nach einem der vorangehenden Ansprüche, **dadurch gekennzeichnet, daß** es ein Spritzgußverfahren ist.

## Claims

1. Method for producing a plurality of moulded parts in which, at at least one point 10, a moulding compound is introduced into a plurality of cavities (20) shaped to correspond to the moulded parts, and the cavities are arranged in such a way that - with the exception of the cavities positioned at the ends or edges - each cavity is joined to at least two closely adjacent cavities, **characterized in that** a surfactant-containing composition is used as the moulding compound.

2. Method according to claim 1, **characterized in that** the cavities (20) are arranged in a row.

3. Method according to claim 1 or 2, **characterized in that** the cavities (20) are arranged in such a way that - apart from the cavities in the edge position - each cavity is arranged so that it is closely adjacent to four other cavities.

4. Method according to claim 1 or 2, **characterized in that** the cavities (20) are arranged in such a way that - apart from the cavities in the edge position - each cavity is arranged so that it is closely adjacent to six other cavities.

5. Method according to one of the preceding claims, **characterized by** a single point for introducing the moulding compound.

6. Method according to claim 5, **characterized in that** point (10) is arranged centrally in the arrangement of cavities.

7. Method according to one of the preceding claims, **characterized in that** the cavities are of substantially spherical shape.

8. Method for producing a plurality of moulded parts, **characterized in that** a moulding compound is introduced into a mould according to one of the claims 1 to 7 in such a way that substantially complete filling of all cavities is ensured.

9. Method according to claim 8, **characterized in that** the material used as moulding compound has a hardness, after solidifying in the mould, of at most 200 N, determined as the force at which an 11-mm diameter sphere of the material bursts.

10. Method according to claim 9, **characterized in that** the material used as moulding compound has a hardness, after solidifying in the mould, between 20 and 120 N.

11. Method according to one of the preceding claims, **characterized in that** it is an injection moulding process.

## Revendications

1. Procédé pour la production d'une multitude de pièces moulées, une matière à mouler étant introduite à au moins un endroit (10) dans une multitude de cavités (20) avec une configuration correspondant aux pièces moulées ; les cavités sont disposées de telle manière que - à l'exception des cavités en position finale ou en position de bord - chaque cavité est reliée à au moins deux cavités immédiatement voisines ; ce procédé est **caractérisé par le fait qu'**une composition contenant des agents tensio-actifs est utilisée en tant que matière à mouler.

2. Procédé, conformément à la revendication 1, **caractérisé par le fait que** les cavités (20) sont disposées en une rangée.

3. Procédé, conformément à la revendication 1 ou 2, **caractérisé par le fait que** les cavités (20) sont disposées de telle manière que - à l'exception des cavités en position de bord - chaque cavité est disposée dans le voisinage immédiat de quatre autres cavités.

4. Procédé, conformément à la revendication 1 ou 2, **caractérisé par le fait que** les cavités (20) sont disposées de telle manière que - à l'exception des cavités en position de bord - chaque cavité est disposée dans le voisinage immédiat de six autres cavités.

5. Procédé, conformément à l'une des revendications précédentes, **caractérisé par le fait qu'**il n'y a qu'un seul point pour l'introduction de la matière à mouler.

6. Procédé, conformément à la revendication 5, **caractérisé par le fait que** le point (10) est installé au centre de la disposition des cavités.

7. Procédé, conformément à l'une des revendications précédentes, **caractérisé par le fait que** les cavités sont configurées essentiellement de façon sphérique.

8. Procédé pour la production d'une multitude de pièces moulées, **caractérisé par le fait qu'**une matière à mouler est introduite de telle manière dans un moule, conformément à l'une des revendications 1 à 7, qu'un remplissage essentiellement intégral de toutes les cavités est assuré.

9. Procédé, conformément à la revendication 8, **caractérisé par le fait qu'**on utilise en tant que matière à mouler une matière qui présente après la solidification dans le moule une dureté de 200 N au maximum, déterminée en tant que force, à laquelle une bille d'un diamètre de 11 mm et constituée de cette matière éclate.

10. Procédé, conformément à la revendication 9, **caractérisé par le fait qu'**on utilise en tant que matière à mouler une matière qui présente après la solidification dans le moule une dureté entre 20 et 120 N.

11. Procédé, conformément à l'une des revendications précédentes, **caractérisé par le fait qu'**il s'agit d'un procédé de moulage par injection.
